(19) Europäisches Patentamt

European Patent Office

Office européen des brevets

(11) **EP 1 292 538 B1**

(12) **EUROPEAN PATENT SPECIFICATION**

(45) Date of publication and mention
of the grant of the patent:
**17.11.2004 Bulletin 2004/47**

(51) Int Cl.7: **C01F 11/02**, B01D 53/50,
C02F 1/00, C02F 1/52

(21) Application number: **01949369.1**

(22) Date of filing: **31.05.2001**

(86) International application number:
**PCT/EP2001/006182**

(87) International publication number:
**WO 2001/096240 (20.12.2001 Gazette 2001/51)**

(54) **STABILISED CALCIUM HYDROXIDE SLURRIES**

STABILISIERTE AUFSCHLÄMMUNGEN VON KALZIUMHYDROXID

BOUES STABILISEES D'HYDROXYDE DE CALCIUM

(84) Designated Contracting States:
**AT BE CH CY DE DK ES FI FR GB GR IE IT LI LU
MC NL PT SE TR**

(30) Priority: **15.06.2000 GB 0014522**

(43) Date of publication of application:
**19.03.2003 Bulletin 2003/12**

(73) Proprietor: **Ciba Specialty Chemicals Water
Treatments Limited
Bradford, West Yorkshire BD12 0JZ (GB)**

(72) Inventor: **BUTTERS, Martin
Thackley, Bradford BD10 8NJ (GB)**

(74) Representative: **Bernhardt, Wolfgang et al
Ciba Specialty Chemicals Holding Inc.
Patentabteilung
Klybeckstrasse 141
4057 Basel (CH)**

(56) References cited:
EP-A- 0 467 165     FR-A- 2 677 351
US-A- 4 610 801     US-A- 4 849 126

**Description**

This invention relates to concentrated Calcium Hydroxide slurries, and a method of preparing Calcium Hydroxide slurries which are low in viscosity and which remain flowable after several days.

Calcium Hydroxide, also known as hydrated lime or slaked lime, is used in large quantities as an acid neutralizer, for treating acidic effluent and for use in the treatment of potable water. Because of the difficulties associated with the handling of solid materials, it is desirable to be able to ship and store Calcium Hydroxide as a high solids aqueous slurry. Slurries of Calcium Hydroxide even at relatively low solids concentrations, are fairly unstable and form either non-flowable gels or hard-pack sediment upon standing, thereby rendering the slurries difficult to off-load after transportation to the point of use and potentially damaging to piping, pumps, and other slurry handling mechanical equipment. It is desirable that the solids content is as high as possible in order to minimise transportation costs and costs associated with production and storage.

EP 467165A discloses sedimentation-stable aqueous suspensions of up to 45 percent by weight of solid mineral particles and 0.5 to 8 percent by weight solid water glass as a stabiliser against sedimentation. The suspensions may also contain 1 to 15 percent by weight based on the mineral particles of thixotropic bentonite and/or polyacrylate. The minerals are Calcium Hydroxide products, clay minerals, bentonite, pigments, activated charcoal, calcium hydroxide, dolomitic calcium hydroxide or milk of Calcium Hydroxide.

US 4,450,013 to Hirsch et al, discloses the use of copolymers of acrylic or methacrylic acid and 2-acrylamido-2-methylpropanesulfonic acid as a grinding or dispersing agent for pigments. The pigments include chalk, clay, satin white, titanium dioxide, kaolin and dolomite.

It is an object of the present invention to provide stabilised slurries of Calcium Hydroxide.

Accordingly in one aspect the present invention provides a composition consisting essentially of an aqueous slurry comprising from 25 to 65 percent by weight Calcium Hydroxide; from 0.05 to 4 percent by weight, based on the weight of Calcium Hydroxide, of at least one acidic polymer or salt thereof; and from 0,2 to 1 percent by weight, based on the weight of Calcium Hydroxide, of at least one or more co-additives selected from boric acid and water soluble salts of boric acid, such as alkali metal borates, ammonium borates, $C_2$ to $C_{10}$ carboxylic acids containing 2 or more acid groups including salts thereof (such as alkali metal salts and ammonium salts), alkali metal hydroxides, alkali metal carbonates, alkali metal sulfates, alkali metal nitrates, alkali metal phosphates, alkali metal silicates, ammonium hydroxides, ammonium carbonates, ammonium sulfates, ammonium nitrates, ammonium phosphates or ammonium silicates. Preferred slurries contain sodium carbonate and sodium hydroxide, or a mixture thereof.

One possible method of introducing sodium carbonate into the slurry includes treating the slurry with $CO_2$ gas (whereby the gas is dispersed by bubbling or using some other known injection process) at a level equivalent to the required quantities when expressed as sodium carbonate. The term "anionic polymer" is hereafter used to describe all polymers with acid groups in the free acid, partially neutralised or fully neutralised forms.

The one or more anionic polymers which are suitable for the present invention may be selected from commercially available anionic dispersants used for producing slurries of minerals, pigments and other substrates. For example, commercial dispersants useful for dispersing calcium carbonate may be suitable as the anionic polymer in this invention.

Anionic polymers based on the following product types may be used for preparing the Calcium Hydroxide slurry:

a) homopolymers and copolymers prepared from addition polymerisation
b) anionic condensation polymers
c) polymers derived from natural sources e.g. anionic polysaccharides from starches etc.

Useful group a) polymers prepared by addition polymerisation could be defined as polymers prepared using at least one ethylenically unsaturated monomer containing at least one acidic or anionic functional group. Homopolymers would, of course, be prepared from just one monomer containing an acidic or anionic functional group. Copolymers would be prepared from two or more monomer types, at least one of which contains an acidic or anionic functional group.

Homopolymers may be prepared using one acidic monomer such as acrylic acid, methacrylic acid, maleic acid, maleic anhydride, fumaric acid, itaconic acid, itaconic anhydride, aconitic acid, crotonic acid, isocrotonic acid, mesaconic acid, vinyl acetic acid, hydroxyacrylic acid, undecylenic acid, allyl sulphonic acid, vinyl sulphonic acid, allyl phosphonic acid, vinyl phosphonic acid, 2-acrylamido-2-methyl propanesulphonic acid or 2-acrylamidoglycolic acid

Copolymers are prepared using at least one monomer from the above group and optionally one or more non-acidic monomers such as acrylamide, acrylic acid esters, acrolein, methacrylic acid esters, maleic acid esters, itaconic acid esters, fumaric acid esters, vinyl acetate, acrylonitrile, styrene, alpha-methyl styrene, N-vinyl pyrrolidone, 2-hydroxyethyl acrylate, 2-hydroxyethyl methacrylate, dimethyl acrylamide, N-(hydroxymethyl)acrylamide or vinyl formamide.

Polymers useful in this invention will be in the form of the water-soluble free acid partial or full alkali metal or ammonium salt or mixed salt. Preferred anionic polymers are made from acrylic acid with one other monomer selected from acrylamide, dimethylacrylamide, methacrylic acid, maleic acid or AMPS (sodium salts) in a preferred composition of 100:0 to 50:50 (on a weight basis) and fully neutralised as the sodium salt. More preferred anionic polymers include polyacrylic acid or the partial or full sodium salt.

Selected monomers are polymerised in a suitable solvent The solvent may typically comprise:

i) water or
ii) organic solvent (eg. propan-2-ol) or
iii) organic solvent + water

A preferred solvent system is water or organic solvent and water, more preferred are propan-2-ol and water or just water.

A solvent containing an alcohol with an alpha-hydrogen (such as propan-2-ol) will function as a chain-transfer reagent in addition to the role as a solvent (see below).

The polymerisation uses a suitable initiator, which include materials that when subjected to heat or chemical inducement, break-down to provide a source of free-radicals. Generally suitable initiators are:.

i) Persulphates e.g. ammonium persulphate
ii) Peroxides e.g. hydrogen peroxide and organic peroxides
iii) Azo compounds e.g. 4,4-azobis(4-cyanavaleric acid)

Such oxidising initiators may be used in combination with a reducing agent (known as a "redox" process) to speed-up the formation of free-radicals. The initiators must be soluble in the reaction solvent.

Preferred initiators are persulfates, a more preferred initiator is ammonium persulfate.

The polymerisation may also incorporate a chain-transfer reagent to help control the molecular weight. Typical chain-transfer reagents are materials with so-called "labile hydrogen". These compounds are typically:

i) alcohols with an alpha-hydrogen (eg. propan-2-ol)
ii) compounds containing -SH group(s) i.e. mercaptans such as thioglycollic acid and 2-mercaptoethanol.
iii) hypophosphorous acid and alkali metal salts, e.g. sodium hypophosphite.

Monomers for polymerisation may be in the form of the free-acid or partial or full alkali metal or ammonium salt or mixtures of different salts.

Polymerisation reactions will normally be conducted at elevated temperature. Where an organic solvent is used, this may be removed after polymerisation by a distillation process. The resultant solution may then be fully neutralised to the full or partial alkali metal or ammonium salt, or mixed salt, with one or more suitable base(s) if necessary.

Fully neutralised polymers are preferred. A preferred base is an alkali metal hydroxide, sodium hydroxide being more preferred.

Group b) Anionic condensation polymers derived from the polymerisation of e.g. amino acids in the form of the free acid, full or partial alkali metal or ammonium salt or mixed salt, may be used. Such products include polyaspartic acid and salts.

Group c) Anionic polymers derived from natural products include polycarboxylic acids derived from polysaccharides from plant sources or produced by micro-organisms. As with other types of polymer, the polysaccharide may be used in the form of the free acid, full or partial alkali metal or ammonium salt or mixed salt. An oxidation step is usually required as part of the process to produce acidic/anionic polysaccharides. Examples include Inulin derivatives, such as Dicarboxyinulin, and Alginic acid.

Polymers useful in this invention have a weight average molecular weight (Mw) of from about 1,000 to about 250,000 as measured by aqueous gel permeation chromatography (gpc). Where "Mw" appears, it refers to the weight average molecular weight as measured by aqueous gpc. Preferred polymers have a weight average molecular weight of from 2,000 to 100,000 more preferred are polymers having a weight average molecular weight of from 3,000 to 10,000.

The method of preparing anionic polymers is well known to those skilled in the art. The anionic addition polymers can be prepared by organic solvent, aqueous, or organic solvent/aqueous processes. The art of preparing anionic polymers has also employed various methods of controlling the molecular weight of polymers. These methods include the use of chain transfer agents, metal activators such as $Fe^{2+}$ in redox initiator systems, control of reaction time and monomer concentration, increased levels of initiators etc.

The co-additive may be selected from boric acid and water soluble salts of boric acid, such as alkali metal borates, ammonium borates, $C_2$ to $C_{10}$ carboxylic acids containing 2 or more acid groups including salts thereof (such as alkali metal salts and ammonium salts), alkali metal hydroxides, alkali metal carbonates, alkali metal sulfates, alkali metal nitrates, alkali metal phosphates, alkali metal silicates, ammonium hydroxides, ammonium carbonates, ammonium sulfates, ammonium nitrates, ammonium phosphates or ammonium silicates. Preferred co-additives include alkali metal carbonates and sodium hydroxides. Co-additives which are more preferred are sodium carbonate and sodium hydroxide, or mixtures thereof.

The slurries of this invention contain from 25 to 65 percent Calcium Hydroxide by weight, preferably from 30 to 60 percent by weight of Calcium Hydroxide and more preferably from 35 to 55 percent Calcium Hydroxide by weight.

The one or more anionic polymers are added to the Calcium Hydroxide slurry to a total level of from 0.05 to 4 percent by weight, and preferably from 0.10 to 2.0 percent by weight based on the weight of Calcium Hydroxide, and more preferably from 0.2 to 1.0 percent by weight of polymer based on the weight of Calcium Hydroxide.

The one or more co-additives are added to the Calcium Hydroxide slurry to a total level of from 0.05 to 4.0 percent by weight, based on the weight of Calcium Hydroxide, preferably from 0.10 to 2.0 percent by weight based on the weight of Calcium Hydroxide and more preferably from 0.20 to 1.0 percent by weight based on the weight of Calcium Hydroxide.

The amounts of the one or more anionic polymers and one or more co-additives used in the preparation of the slurry may affect the viscosity and stability of the final slurry. It is desirable to control the amount of anionic polymer and/or co-additive in order to produce a slurry of viscosity between 50 - 2000 cP, preferably 100 - 1000 cP and most preferably 150 - 750 cP (measured using a Brookfield LVT viscometer, spindle 3 at 60 rpm) and stability, measured as a % recovery, of greater than or equal to 80%, preferably greater than or equal to 90% and most preferably greater than or equal to 95%.

In another aspect the invention provides a method of preparing a stabilised aqueous slurry comprising from 25 to 65 percent by weight Calcium Hydroxide; from 0.05 to 4 percent by weight, based on the weight of Calcium Hydroxide, of at least one anionic polymer; and from 0.05 to 4 percent by weight, based on the weight of Calcium Hydroxide, of at least one or more co-additives selected from boric acid and water soluble salts of boric acid, such as alkali metal borates, ammonium borates, $C_2$ to $C_{10}$ carboxylic acids containing 2 or more acid groups including salts thereof (such as alkali metal salts and ammonium salts), alkali metal hydroxides, alkali metal carbonates, alkali metal sulfates, alkali metal nitrates, alkali metal phosphates, alkali metal silicates, ammonium hydroxides, ammonium carbonates, ammonium sulfates, ammonium nitrates, ammonium phosphates or ammonium silicates.

The method of preparing a stabilised aqueous slurry may comprise of adding calcium hydroxide to an aqueous solution of anionic polymer and co-additive and applying agitation before and/or during and/or after the addition of calcium hydroxide to form a homogenous slurry.

The method of preparing a stabilised aqueous slurry may comprise of adding polymer, co-additive or both directly to calcium hydroxide slurry and applying agitation before and/or during and after the addition of the additives to form a homogenous slurry.

The method of preparing a stabilised aqueous slurry may comprise the slaking of calcium oxide in water whereby anionic polymer and co-additive are added during and/or after the addition of calcium oxide. In this method agitation may be applied before and/or during and after the addition of calcium oxide and the additives to form a homogenous slurry.

The method of preparing a stabilised aqueous slurry may comprise the slaking of calcium oxide in water whereby the water contains anionic polymer, co-additive or both optionally followed by the further addition of more anionic polymer, co-additive or both added during and/or after the addition of calcium oxide. In this method agitation may be applied before and/or during and after the addition of calcium oxide and the additives to form a homogenous slurry.

Another method may involve the slaking of calcium oxide in more than one slaking step. In this method the first slaking step may comprise the addition of a portion of the total calcium oxide to a portion of the total water. The second slaking step may proceed when the first slaking reaction is advanced or complete. In the second slaking step a second portion of water may be added to the slurry from the first slaking step followed by the addition of a second portion of calcium oxide. Further slaking steps may be carried out in this manner. Yet another slaking method may involve the continuous addition of calcium oxide to a portion of water and the remaining portion of water may then be added in a single addition or in a number of additions or in a continuous feed during or during and after the addition of calcium oxide. In both of these slaking methods mixing may be applied before and/or during and after the addition of calcium oxide to a point when all of the water has been added and the slaking reaction is advanced or complete and the slurry is homogenous. In both of these slaking methods the anionic polymer and co-additives may be dissolved in the one or more portions of water to be used in the process, for example.

Other methods for preparing stabilised calcium hydroxide slurries include the use of calcium oxide and pre-prepared calcium hydroxide eg. hydrated lime. One such method comprises the addition of hydrated lime to a slurry produced from the slaking of calcium oxide in water. Another method comprises the addition of calcium oxide to a hydrated lime slurry with sufficient water present to allow the conversion of the calcium oxide to calcium hydroxide in a slaking reaction and to give a slurry of the desired calcium hydroxide solids content. In yet another method, a slurry produced from hydrated lime may be blended with a slurry produced by the slaking of calcium oxide, or visa versa, to give the final calcium hydroxide slurry. In these methods mixing is applied as necessary to form a homogenous slurry. Anionic polymer and co-additive may be added at various points in the process, examples of which have been mentioned earlier.

The method of preparing a stabilised aqueous slurry may comprise any method above whereby the anionic polymer and co-additive are added separately or as a combined solution.

The method of preparing a stabilised aqueous slurry may comprise any method above whereby the anionic polymer and co-additive are added individually or combined, in one or more additions or as a continuous feed during the preparation of the slurry.

The method for preparing stabilised aqueous slurry may include a milling step or other mechanical particle-size reduction step employed during and/or after the addition of calcium hydroxide or calcium oxide.

The method for preparing stabilised slurries, such as in the examples above, may involve the use of an un-neutralised or partially neutralised anionic polymer. In this method, for example, a basic co-additive may be used whereby some of the co-additive reacts with anionic polymer to fully neutralise the anionic polymer leaving a remaining quantity of co-additive in the effective range of co-additive specified in this patent.

When alkali metal hydroxides or ammonium hydroxides are used as the co-additive, a preferred method of slurry preparation comprises preparing an aqueous solution of alkali metal hydroxide or ammonium hydroxide and anionic polymer and adding calcium hydroxide or calcium oxide to the aqueous solution with agitation applied before and/or during the addition of calcium hydroxide or calcium oxide. In this method agitation is applied for a period of time after the addition of calcium hydroxide or calcium oxide until a homogenous and constantly low viscosity calcium hydroxide slurry is obtained.

Another preferred method involves the addition of anionic polymer and alkali metal hydroxide or ammonium hydroxide during and after the addition of calcium hydroxide or calcium oxide.

Anionic polymer and alkali metal or ammonium hydroxide will be added in a manner such that the anionic polymer addition is completed at approximately the same time or after the point at which the alkali metal or ammonium hydroxide addition is complete.

Agitation is applied before and/or during the addition and after the addition for a period of time until a homogenous and constantly low viscosity slurry is obtained.

A further aspect of the invention is a composition comprising an aqueous slurry comprising from 25 to 65 percent by weight Calcium Hydroxide; from 0.05 to 4 percent of one or more anionic polymers or salt thereof having a relatively low polydispersity based on the weight of Calcium Hydroxide, which additionally comprises from 0.05 to 4 percent by weight, based on the weight of Calcium Hydroxide, of one or more co-additives selected from boric acid and water soluble salts of boric acid, such as alkali metal borates, ammonium borates, $C_2$ to $C_{10}$ carboxylic acids containing 2 or more acid groups including salts thereof (such as alkali metal salts and ammonium salts), alkali metal hydroxides, alkali metal carbonates, alkali metal sulfates, alkali metal nitrates, alkali metal phosphates, alkali metal silicates, ammonium hydroxides, ammonium carbonates, ammonium sulfates, ammonium nitrates, ammonium phosphates or ammonium silicates.

Low polydispersity anionic polymers according to the invention may have a molecular weight of from 2000 to 3999, and a polydispersity of less than or equal to 2.2, preferably a polydispersity of less than or equal to 2.0, more preferably a polydispersity of less than or equal to 1.9.

Other low polydispersity anionic polymers according to the invention may have a molecular weight of from 4000 to 5999, and a polydispersity of less than or equal to 2.3, preferably a polydispersity of less than or equal to 2.1, more preferably a polydispersity of less than or equal to 2.0.

Other low polydispersity anionic polymers according to the invention may have a molecular weight of from 6000 to 7999, and a polydispersity of less than or equal to 2.4, preferably a polydispersity of less than or equal to 2.2, more preferably a polydispersity of less than or equal to 2.1.

Other low polydispersity anionic polymers according to the invention may have a molecular weight of from 8000 to 10000, and a polydispersity of less than or equal to 2.5, preferably a polydispersity of less than or equal to 2.3, more preferably a polydispersity of less than or equal to 2.2.

The polydispersity factor is the weight average molecular weight of the polymer divided by the number average molecular weight of said polymer, and indicates the spread of molecular weights of polymeric molecules in the samples. This is determined by Gel Permeation Chromatography.

The low polydispersity anionic polymers which are suitable for the present invention may be selected from commercially available low polydispersity anionic dispersants used for producing slurries of minerals, pigments and other substrates. For example, low polydispersity dispersants useful for dispersing calcium carbonate may be suitable as the anionic polymer in this invention.

Low polydispersity anionic polymers based on homopolymers and copolymers prepared from addition polymerisation may be used for preparing the Calcium Hydroxide slurry.

These types of polymeric dispersants generally have a weight average molecular weight (Mw) of from about 2,000 to about 10,000 as measured by aqueous gel permeation chromatography (gpc).

Preferred polymeric dispersants have a weight average molecular weight (Mw) of from about 3,000 to about 9,000 as measured by aqueous gel permeation chromatography (gpc), more preferred have a weight average molecular weight (Mw) of from about 4000 to about 8000.

Useful low polydispersity anionic polymers are prepared using at least one ethylenically unsaturated monomer containing at least one acidic or anionic functional group. Low polydispersity anionic polymers may produced by employing an extra process to the processes previously described for producing homopolymers and copolymers prepared from addition polymerisation. This extra process may be known as a fractionation process.

In such a process a water soluble acidic polymer can be fractionated into higher and lower molecular weight fractions and in which the molecular weight in each fraction can be freely selected simply by appropriate selection of the fractionation conditions. This process is therefore useful for preparing polymers of low polydispersity suitable for use in the preparation of Calcium Hydroxide slurries according to one aspect of the invention.

In this process a solution is formed in a blend of water and a polar solvent of a water soluble polymer containing neutralised acid groups and the solution is separated into an aqueous phase containing a higher molecular weight fraction of the polymer and an organic phase containing a lower molecular weight fraction of the polymer, and in this process the polar solvent is a $C_1$ to $C_5$ alcohol, the acid groups are neutralised with cations selected from sodium, potassium, lithium and ammonium and the molar proportion of neutralised acid groups is 10 to 55% when the cation is selected from sodium and potassium, 10 to 70% when the cation is ammonium and 30 to 90% when the cation is lithium.

The precise split between the lower and higher molecular weight fractions can be selected by altering the process conditions and in particular the degree of neutralisation, and so a simple process exists by which an acidic, water soluble, polymer can be fractionated into preselected molecular weight fractions. Both fractions of polymer are commercially useful and so are recovered and used, the fraction in the organic phase being useful where lower molecular weights are desired and the fraction in the aqueous phase being useful where higher molecular weights are desired.

The polymer in each fraction will have lower polydispersity than the starting polymer. Each of the polymer solutions can be used in the form in which it is obtained by phase separation, for instance simply by mixing the solution into the water or other liquor to be treated, or the polymer can be recovered from the solution by evaporation, precipitation or other conventional recovery techniques. The polymer in each of the separated solutions is generally in a partially neutralised state and can be acidified or fully neutralised in conventional manner if desired.

The degree of neutralisation of the acid groups controls the fractionation. The results obtained in any particular process will depend upon, inter alia, the concentrations, the polymer type and the solvent, but there is a minimum degree of neutralisation below which substantially no fractionation occurs and the system may instead remain as a homogenous solution. When the cation is sodium, potassium or lithium the degree of neutralisation will normally be at least 10%, often at least 15% and preferably at least 25% whilst if the cation is lithium the degree of neutralisation will normally have to be at least about 30%, preferably at least 40% and generally at least 50%. If the degree of neutralisation is too high the size of the lower molecular weight fraction is unacceptably low. When the cation is sodium or potassium the degree of neutralisation will normally be below 55%, preferably below 50% and most preferably below 40%. When the cation is ammonium the degree of neutralisation will normally be below 70%, preferably below 60% and most preferably below 50%. When the cation is lithium the degree of neutralisation will normally be below 90%, and preferably below 70%.

In any particular process the size of, for instance, the higher molecular weight fraction can be increased (with consequential reduction in its average molecular weight and consequential reduction in the size and the average molecular weight of the lower molecular weight fraction) by increasing the amount of alkali and conversely the size of the low molecular weight fraction can be increased by reducing the amount of alkali.

The process conditions are preferably selected such that each fraction contains from 20 to 80%, and most preferably 30 to 70%, by weight of the starting polymer.

The partial neutralisation of the acidic polymer is normally achieved by adding a compound that will provide the chosen cation, the compound usually being a hydroxide, in the selected amount to the dissolved polymer. Mixtures of two or more of the four cations may be utilised, in which event the proportions will be selected such that they have the same effect as the amounts specified for the individual cations.

For any particular polymer, the degree of fractionation is dependent not only on the degree of neutralisation and the type of cation but also upon the concentration of the polymer and the choice and amount of the alcohol. The alcohol is preferably isopropanol but propanol and other alcohols, especially $C_2$ to $C_5$ alcohols, may be used. The proportion of water:alcohol by weight is preferably from 1:0.2 to 1:5, most preferably 1:0.5 to 1:2 with best results generally being achieved, especially when the alcohol is isopropanol and the cation is sodium, when the proportion is about 1:1. The proportions should be selected such that, having regard to the degree and nature of neutralisation, each of the phases will have a polymer concentration of at least 15% by weight of the phase.

The amount of the polymer (measured as the acid polymer) is normally at least 5% by weight based on the weight of polymer, alcohol, and water (including water introduced with the alkali) and preferably is at least 10%. The concentration must not be so high that the system is so viscous that mixing and phase separation is significantly impeded and so is generally below 30%. Preferably the concentration is 15 to 25% by weight.

The phase separation may also be affected by the temperature at which the process is conducted. This may be between 15°C and 80°C, but preferably is between 30°C and 70°C.

The process may be conducted by combining the essential components of the solution in any convenient manner, for instance by adding aqueous alkali to the aqueous organic reaction product obtained by polymerisation of the monomer or monomers in aqueous organic solution. The process may be conducted continuously or batchwise. Depending upon the degree of neutralisation and type and strength of base, the concentration of the polymer, the amount of solvent and the temperature the phase separation may occur rapidly or slowly.

For instance it may occur substantially instantaneously or it may be necessary to leave the system to stand for periods of, for instance, 5 minutes to 2 hours, typically 30 minutes to 1 hour. The separation may be conducted batchwise or continuously, with the mix being fed through a conventional separation column or separation reactor.

The two phases are kept separate, may be fully neutralised with the same or different alkali and organic solvent may be stripped from the organic phase by distillation.

The slurries of this invention contain from 25 to 65 percent Calcium Hydroxide by weight, preferably from 30 to 60 percent by weight of Calcium Hydroxide and more preferably from 35 to 55 percent Calcium Hydroxide by weight.

The one or more anionic polymers are added to the Calcium Hydroxide slurry to a total level of from 0.05 to 4 percent by weight, and preferably from 0.10 to 2.0 percent by weight based on the weight of Calcium Hydroxide, and more preferably from 0.2 to 1.0 percent by weight of polymer based on the weight of Calcium Hydroxide.

The one or more co-additives are added to the Calcium Hydroxide slurry to a total level of from 0.05 to 4.0 percent by weight, based on the weight of Calcium Hydroxide, preferably from 0.10 to 2.0 percent by weight based on the weight of Calcium Hydroxide and more preferably from 0.20 to 1.0 percent by weight based on the weight of Calcium Hydroxide.

One possible method of introducing carbonate into the slurry includes treating the slurry with $CO_2$ gas (whereby the gas is dispersed by bubbling or using some other known injection process) at a level equivalent to the required quantities when expressed as sodium carbonate.

Suitable $C_2$ to $C_{10}$ carboxylic acid salts include alkali metal or ammonium oxalates, alkali metal or ammonium malonates, alkali metal or ammonium succinates, alkali metal or ammonium glutarates, alkali metal or ammonium adipates, alkali metal or ammonium fumarates, alkali metal or ammonium maleates, alkali metal or ammonium phthalates.

Preferred co-additives include sodium carbonate and sodium hydroxide, or mixtures thereof.

The amounts of the one or more anionic polymers and one or more co-additives used in the preparation of the slurry may affect the viscosity and stability of the final slurry. It is desirable to control the amount of anionic polymer and/or co-additive in order to produce a slurry of viscosity between 50 - 2000 cP, preferably 100 - 1000 cP and most preferably 150 - 750 cP (measured using a Brookfield LVT viscometer, spindle 3 at 60 rpm) and stability, measured as a % recovery, of greater than or equal to 80%, preferably greater than or equal to 90% and most preferably greater than or equal to 95%.

In another aspect the invention provides a method of preparing an aqueous slurry comprising from 25 to 65 percent by weight Calcium Hydroxide; from 0.05 to 4 percent by weight, based on the weight of Calcium Hydroxide, of at least one anionic polymer of low polydispersity, and 0.05 to 4 percent by weight, based on the weight of Calcium Hydroxide, of one or more co-additives selected from boric acid and water soluble salts of boric acid, such as alkali metal borates, ammonium borates, $C_2$ to $C_{10}$ carboxylic acids containing 2 or more acid groups including salts thereof (such as alkali metal salts and ammonium salts), alkali metal hydroxides, alkali metal carbonates, alkali metal sulfates, alkali metal nitrates, alkali metal phosphates, alkali metal silicates, ammonium hydroxides, ammonium carbonates, ammonium sulfates, ammonium nitrates, ammonium phosphates or ammonium silicates.

The method of preparing a stabilised aqueous slurry may comprise of adding calcium hydroxide to an aqueous solution of anionic polymer and co-additive and applying agitation before and/or during and after the addition of calcium hydroxide to form a homogenous slurry.

The method of preparing a stabilised aqueous slurry may comprise of adding polymer, co-additive or both directly to calcium hydroxide slurry and applying agitation before and/or during and after the addition of the additives to form a homogenous slurry.

The method of preparing a stabilised aqueous slurry may comprise the slaking of calcium oxide in water whereby anionic polymer and co-additive are added during and/or after the addition of calcium oxide. In this method agitation may be applied before and/or during and after the addition of calcium oxide and the additives to form a homogenous slurry.

The method of preparing a stabilised aqueous slurry may comprise the slaking of calcium oxide in water whereby the water contains anionic polymer, co-additive or both optionally followed by the further addition of more anionic polymer, co-additive or both added during and/or after the addition of calcium oxide. In this method agitation may be applied before and/or during and after the addition of calcium oxide and the additives to form a homogenous slurry.

Another method may involve the slaking of calcium oxide in more than one slaking step. In this method the first slaking step may comprise the addition of a portion of the total calcium oxide to a portion of the total water. The second slaking step may proceed when the first slaking reaction is advanced or complete. In the second slaking step a second portion of water may be added to the slurry from the first slaking step followed by the addition of a second portion of calcium oxide. Further slaking steps may be carried out in this manner. Yet another slaking method may involve the continuous addition of calcium oxide to a portion of water and the remaining portion of water may then be added in a single addition or in a number of additions or in a continuous feed during or during and after the addition of calcium oxide. In both of these slaking methods mixing may be applied before and/or during and after the addition of calcium oxide to a point when all of the water has been added and the slaking reaction is advanced or complete and the slurry is homogenous. In both of these slaking methods the anionic polymer and co-additives may be dissolved in the one or more portions of water to be used in the process, for example.

Other methods for preparing stabilised calcium hydroxide slurries include the use of calcium oxide and pre-prepared calcium hydroxide eg. hydrated lime. One such method comprises the addition of hydrated lime to a slurry produced from the slaking of calcium oxide in water.

Another method comprises the addition of calcium oxide to a hydrated lime slurry with sufficient water present to allow the conversion of the calcium oxide to calcium hydroxide in a slaking reaction and to give a slurry of the desired calcium hydroxide solids content. In yet another method, a slurry produced from hydrated lime may be blended with a slurry produced by the slaking of calcium oxide, or visa versa, to give the final calcium hydroxide slurry. In these methods mixing is applied as necessary to form a homogenous slurry. Anionic polymer and co-additive may be added at various points in the process, examples of which have been mentioned earlier.

The method of preparing a stabilised aqueous slurry may comprise any method above whereby the anionic polymer and co-additive are added separately or as a combined solution.

The method of preparing a stabilised aqueous slurry may comprise any method above whereby the anionic polymer and co-additive are added individually or combined, in one or more additions or as a continuous feed during the preparation of the slurry.

The method for preparing stabilised aqueous slurry may include a milling step or other mechanical particle-size reduction step employed during and/or after the addition of calcium hydroxide or calcium oxide.

The method for preparing stabilised slurries, such as in the examples above, may involve the use of an un-neutralised or partially neutralised anionic polymer. In this method, for example, a basic co-additive may be used whereby some of the co-additive reacts with anionic polymer to fully neutralise the anionic polymer leaving a remaining quantity of co-additive in the effective range of co-additive specified in this patent.

When alkali metal hydroxides or ammonium hydroxides are used as the co-additive, a preferred method of slurry preparation comprises preparing an aqueous solution of alkali metal hydroxide or ammonium hydroxide and anionic polymer and adding calcium hydroxide or calcium oxide to the aqueous solution with agitation applied before and/or during the addition of calcium hydroxide or calcium oxide. In this method agitation is applied for a period of time after the addition of calcium hydroxide or calcium oxide until a homogenous and constantly low viscosity calcium hydroxide slurry is obtained.

Another preferred method involves the addition of anionic polymer and alkali metal hydroxide or ammonium hydroxide during and after the addition of calcium hydroxide or calcium oxide.

Anionic polymer and alkali metal or ammonium hydroxide will be added in a manner such that the anionic polymer addition is completed at approximately the same time or after the point at which the alkali metal or ammonium hydroxide addition is complete.

Agitation is applied before and/or during the addition and after the addition for a period of time until a homogenous and constantly low viscosity slurry is obtained.

All the aqueous slurries of the present invention have a relatively low viscosity and a relatively improved stability over an extended period of time.

The slurries may be utilised in various applications including:

(a) treatment of industrial wastewater to adjust the pH by neutralisation and improving clarification of waste water
(b) potable water softening neutralisation and impurity removal to produce drinking water

(c) flue gas desulphurization treatment of gases from industrial facilities, power plants, incinerators etc. Where the Calcium Hydroxide absorbs and neutralises sulphur oxide, reducing emission and improving the environment
(d) flocculation, i.e. settlement of suspended solids to aid recovery of clear water

The following examples further illustrate the present invention:

(a) Example 1

Preparation of "Polymer A"

Acrylic acid monomer was converted to polyacrylic acid in a polymerisation reaction in a water/propan-2-ol solvent mixture using ammonium persulphate as thermal initiator. After polymerisation the propan-2-ol was removed by passing the solution through a distillation column. The resulting aqueous polyacrylic acid was then fully neutralised with NaOH and the polymer concentration adjusted to approximately 40% to give the final product.

Example 2

Preparation of "Polymer B"

Acrylic acid monomer was converted to polyacrylic acid in a polymerisation reaction in a water/propan-2-ol solvent mixture using ammonium persulphate as thermal initiator. After polymerisation the polymer solution was partially neutralised with sodium hydroxide and the solution allowed to separate into two layers, a propan-2-ol rich upper layer and a water rich lower layer. The upper layer contained polymer comprising mainly lower molecular weight material from the original polymer and the lower layer contained polymer comprising mainly higher molecular weight material from the original polymer. The layers were separated and the lower layer passed through a distillation column to remove propan-2-ol. The resulting aqueous polyacrylic acid solution was then fully neutralised with NaOH and the polymer concentration adjusted to approximately 40% to give the final product.

Example 3

The molecular weight characteristics of the Polymers A and B were determined by Gel Permeation Chromatography (GPC). Data obtained from GPC techniques are not absolute but dependent on the "system" used i.e. the particular type of equipment, the operating conditions and in particular the standards used to calibrate the GPC system. Data obtained from different systems are not necessarily comparable. The molecular weight data in this example were obtained as follows. The GPC system used included a set of GPC columns comprising of a TSK PWXL guard column, a G4000 and G3000 column from Toso Haas Corporation, a differential refractive index detector, pump and column oven. The system included a computer with software for data collection, construction of calibration curves and determination of molecular weight data. The operating conditions used for calibration and sample analysis involved the use of a mobile phase of 0.2M sodium chloride buffered with 0.005M dipotassium hydrogen phosphate (prepared in purified water), a flow-rate of 0.5 ml/min and column temperature of 40°C. The system was calibrated with a range of at least 6 polyacrylic acid (sodium salt) standards of molecular weight within the range 1,000 to 800,000. From the analysis of standards, the computer software constructed a calibration curve of retention time versus the logarithm of molecular weight (third order polynomial fit). Samples to be analysed were diluted in mobile phase solution to an approximate concentration of 0.15% w/v. This solution was filtered through a 0.45 micron filter and then injected into the system for analysis. Data collection and determination of molecular weight data in the form of weight and number averages and polydispersity were handled by the computer software. Ethylene glycol was added to each sample to monitor and correct for minor changes in flow rate.
Molecular weight data obtained is shown in Table 1:

Table 1

| Polymer | A | B |
|---|---|---|
| weight average molecular weight (Mw) | 4960 | 5570 |
| number average molecular weight (Mn) | 2030 | 2850 |
| Polydispersity (Mw/Mn) | 2.44 | 1.95 |

Polydispersity indicates the spread of molecular weights of polymeric molecules in the samples. The samples differ in polydispersity due to differences in the methods of preparation.

### Example 4

#### Ca(OH)$_2$ slurries prepared involving a staking stage

This test involved the slaking of CaO to Ca(OH)$_2$ and addition of a small amount of powdered Ca(OH)$_2$ to obtain a final slurry at 40% solids. In this example the anionic polymer dose is 0.25% (weight of polymer on weight of Ca(OH)$_2$). Method of slurry preparation:

#### Slaking Reaction

Into a beaker was placed deionised water (at 14 - 16°C), anionic polymer (AP) and a co-additive (where required). The liquid was stirred to create a homogenous solution. Calcium oxide powder was added to the solution evenly over 15 minutes with agitation applied at 250 - 750 rpm using a laboratory mixer. The exothermic slaking reaction caused the temperature to increase to a maximum temperature of 60 - 90 °C. After a total mixing time of 30 minutes the temperature of the slaked Calcium Hydroxide slurry was cooled to 40 - 50 °C using a cooling-bath.

#### Preparation of final slurry

Into a beaker was added the required amount of deionised water, anionic polymer and co-additive (where required). Where dispersant and/or co-additive was added, the liquid was stirred to form a homogenous aqueous solution. The aqueous solution was added to the slaked Calcium Hydroxide slurry and the slurry stirred until homogenous. The required amount of Ca(OH)2 powder was then added and the slurry stirred for a total of 50 minutes at a speed of up to 750rpm using a laboratory mixer. A dry weight test (1g of slurry dried for 1 hour at 110°C) was conducted on the slurry to determine the solids content. Due to evaporation the solids content of the slurry was generally just above 40% therefore a dilution was carried out using deionised water to adjust the slurry to 40.0%. The slurry was then stirred to homogenise, adjusted to a temperature of 25 +/- 1 °C and the viscosity determined using a Brookfield LVT Viscometer (spindle 3, 60rpm). The stability of the slurry was determined using Stability Method 1, as follows.

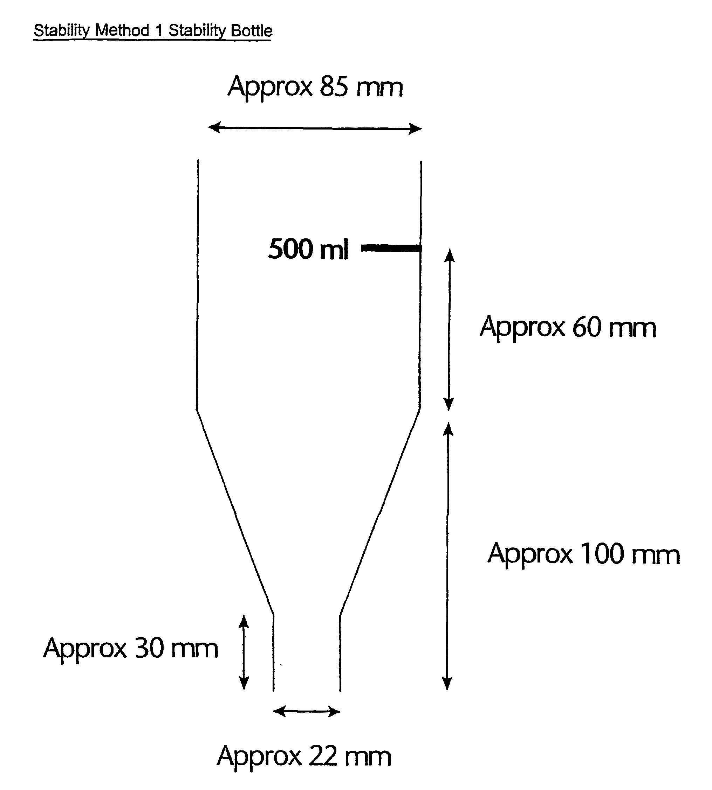

A Stability Bottle was prepared from a 1 litre plastic, soft-drink bottle by cutting-off the bottom of the bottle and cleaning and drying. The Stability Bottle is represented in Figure 1 below. With a rubber bung firmly in place the bottle was tared on a balance capable of reading to 2 decimal places. Approximately 500 ml of the slurry was added and the weight recorded (Starting Weight). The open end of the bottle was covered to prevent evaporation and the bottle stored at room temperature in a vertical position for 1 week. After 1 week the cover was removed and with the bottle still vertical the bung was removed allowing free and fluid slurry to drain from the bottle into a collection beaker. The time taken for the slurry to drain to a point where the flow had stopped was recorded as was the total weight of slurry recovered. The flow-rate (grams/second) was calculated. The weight of slurry that drained from the bottle was determined (Recovered Weight) and the Recovery (%) was calculated as follows:

$$\% \text{ Recovery} = RW / SW \times 100 \ (RW = \text{Recovered Weight, } SW = \text{Starting Weight})$$

% Recovery is a key measurement of slurry stability in terms of stability against undesirable hard sedimentation and/or gelation over time. The higher the % Recovery value the lower is the hard sedimentation and/or gelation. Flow-rate provides an additional indicator of stability, where a high flow rate is indicative of good flow properties. The results are shown in table 2 below:

Table 2

| Anionic Polymer | | | Co-Additive | | | Final Slurry Properties | | |
|---|---|---|---|---|---|---|---|---|
| Polymer | Add Pt. | Dose % | Type | Add Pt | Dose % | Viscosity cP | Recovery % | Flow Rate g/s |
| None | n/a | n/a | None | n/a | n/a | >2000 | 7.6 | 0.2 |
| A | SP | 0.25 | None | n/a | n/a | 465 | 95.3 | 13.0 |
| A | SP | 0.25 | Na$_2$CO$_3$ | PS | 0.25 | 561 | 96.8 | 26.8 |
| A | SP | 0.25 | Na$_2$CO$_3$ | PS | 0.50 | 549 | 94.4 | 17.7 |

Table 2   (continued)

| Anionic Polymer | | | Co-Additive | | | Final Slurry Properties | | |
|---|---|---|---|---|---|---|---|---|
| Polymer | Add Pt. | Dose % | Type | Add Pt | Dose % | Viscosity cP | Recovery % | Flow Rate g/s |
| A | SP | 0.25 | $Na_2CO_3$ | PS | 0.75 | 222 | 97.6 | 23.4 |
| A | SP | 0.25 | $Na_2CO_3$ | PS | 1.00 | 305 | 98.0 | 34.7 |
| A | SP | 0.25 | $Na_2CO_3$ | SP | 0.25 | 218 | 98.8 | 28.8 |
| A | SP | 0.25 | $Na_2CO_3$ | SP | 0.50 | 70 | 99.0 | 31.6 |
| A | SP | 0.25 | $Na_2B_4O_7$ | SP | 0.10 | 542 | 97.5 | 22.7 |
| Definitions:<br>Add Pt. = Addition Point<br>SP = Slaking Phase (i.e. present during slaking reaction)<br>PS = Post Slaking (i.e. added after slaking reaction) | | | | | | | | |

The solids content of each slurry was 40% w/w. The dosages of anionic polymer and co-additive are based on the weight of dry additive and the weight of dry calcium hydroxide. For example 0.25% is equivalent to 0.25 grams of dry or active polymer or co-additive per 100 grams of dry calcium hydroxide in the final slurry

Lower viscosity and improved stability in the final slurry can be obtained by using combinations of anionic polymer and co-additive.

Example 5

Ca(OH)2 slurries prepared involving a slaking stage

The method according to Example 4 was used to prepare and characterize further slurries at 40% solids. In this example the polymer dose was varied. The results are shown in table 3 below:

Table 3

| Anionic Polymer | | | Co-Additive | | | Final Slurry Properties | | |
|---|---|---|---|---|---|---|---|---|
| Polymer | Add Pt. | Dose % | Type | Add Pt. | Dose % | Viscosity cP | Recovery % | Flow Rate g/s |
| A | SP | 0.15 | - | - | - | 1570 | 75.2 | 21.0 |
| A | SP | 0.25 | - | - | - | 465 | 95.3 | 13.0 |
| A | SP | 0.35 | - | - | - | 522 | 96.9 | 22.4 |
| A | SP | 0.45 | - | - | - | 601 | 95.9 | 24.6 |
| A | SP | 0.15 | $Na_2CO_3$ | SP | 0.25 | 544 | 96.0 | 20.8 |
| A | SP | 0.25 | $Na_2CO_3$ | SP | 0.25 | 218 | 98.8 | 28.8 |
| A | SP | 0.35 | $Na_2CO_3$ | SP | 0.25 | 228 | 99.1 | 35.2 |
| A | SP | 0.15 | NaOH | SP | 0.25 | >2000 | 98.4 | 8.1 |
| A | SP | 0.25 | NaOH | SP | 0.25 | 1372 | 94.9 | 37.7 |
| A | SP | 0.35 | NaOH | SP | 0.10 | 470 | 95.6 | 43.6 |
| Definitions:<br>Add Pt. = Addition Point<br>SP = Slaking Phase (i.e. present during slaking reaction) | | | | | | | | |

The solids content of each slurry was 40% w/w. The dosages of anionic polymer and co-additive are based on the weight of dry additive and the weight of dry calcium hydroxide as in the previous example.

Example 6

Ca(OH)$_2$ slurries prepared directly from powdered Ca(OH)$_2$.

Powdered Ca(OH)$_2$ was used to prepare slurries at 40% w/w solids using the following procedure.

Ca(OH)$_2$ was weighed into a beaker. Into a separate beaker was weighed polymer, sodium carbonate and deionised water and agitation was applied to form a solution. Ca(OH)$_2$ powder was then added gradually to the aqueous solution with the agitation applied to the slurry using a laboratory mixer at 250 to 750 rpm to maintain a small vortex in the slurry. The slurry was stirred for a further 15 minutes after the final addition of Ca(OH)$_2$. A dry weight test (1g of slurry dried for 1 hour at 110°C) was conducted on the slurry to determine the solids content and if necessary a dilution was made with deionised water to adjust the slurry to 40.0%. The slurry was then adjusted to a temperature of 25 +/- 1 °C, stirred to break any structure that may have formed and the viscosity determined using a Brookfield LVT Viscometer (spindle 3, 60rpm). In one set of tests the stability of the slurries were determined by Stability Method 1 (described in Example 4 above) for a storage period of 2 weeks. In another set of tests an alternative stability method was used, referred to as Stability Method 2, carried out as follows.

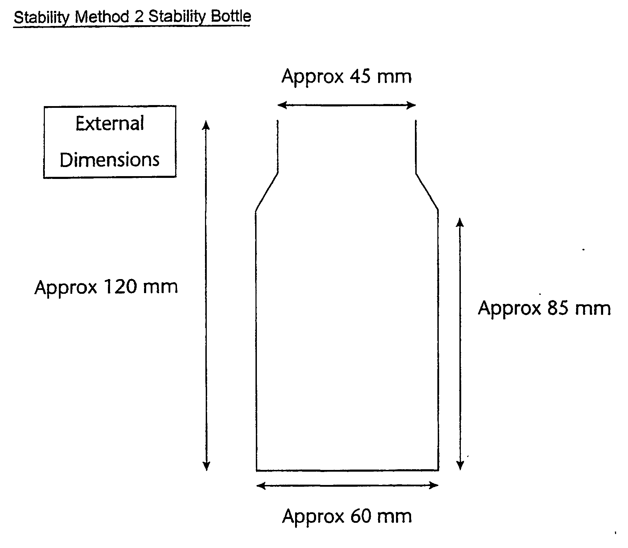

Into a glass bottle (see Figure 2) was added approximately 200ml of slurry under test and the weight of slurry added was recorded (Starting Weight). The bottle was capped and left undisturbed at room temperature for 1 or 2 weeks. When the storage time had elapsed the cap was removed from the bottle and the bottle inverted 180° directly over a pre-weighed beaker and the contents of the bottle allowed to drain for 2 minutes. During this draining period, the bottle was moved gently in an arc without sudden jerks. The weight of fluid collected (Recovered Weight) was determined and the Recovery calculated by the equation in Example 4. The results are shown in tables 4 and 5 below:

Stability Method 1

Table 4

| Anionic Polymer | Anionic Polymer Dose % | Co-additive % | Solids % w/w | Viscosity LVT 60 rpm | 2 Week Recovery % |
|---|---|---|---|---|---|
| - | - | - | 30 | 228 | 1.6 |
| B | 0.5 | 1.0 of Na$_2$CO$_3$ | 40 | 124 | 96.9 |
| B | 0.75 | 0.25 of Na$_2$CO$_3$ | 40 | 142 | 95.5 |

The dosages of anionic polymer and co-additive are based on the weight of dry additive and the weight of dry calcium hydroxide as in the previous examples.

Stability Method 2

Table 5

| Polymer | Anionic Polymer Dose % | Na$_2$CO$_3$ % | Solids % w/w | Viscosity LVT 60 rpm | 1 Week Recovery % | 2 Week Recovery % |
|---|---|---|---|---|---|---|
| - | - | - | 30 | 178 | 71.8 | 48.4 |
| A | 0.50 | 1.0 | 40 | 316 | 65.7 | 59.9 |
| A | 0.75 | 1.0 | 40 | 64 | 96.3 | 93.3 |
| B | 0.50 | 1.0 | 40 | 178 | 92.9 | 902 |

The dosages of anionic polymer and co-additive are based on the weight of dry additive and the weight of dry calcium hydroxide as in the previous examples.

In both sets of results it is shown that the use of the invention allows the preparation of a higher solids content slurry of equivalent or lower viscosity and superior stability at the correct dosages of additives compared to when no additives are used. An additional improvement is demonstrated from the use of a polymer with lower polydispersity.

The % recovery values, viscosity measurements and flow rates demonstrate the improved properties of the present Calcium Hydroxide slurries.

Example 7

In one test (test 1) a 45% w/w calcium hydroxide slurry was prepared by the addition of calcium hydroxide to water containing an amount of Polymer B equivalent to 0.5% by weight of dry polymer on weight of dry calcium hydroxide and an amount of sodium hydroxide equivalent to 0.5% by weight of dry NaOH on weight of dry calcium hydroxide. Polymer B and sodium hydroxide were dissolved in the water for the slurry before commencing the addition of calcium hydroxide. The calcium hydroxide was gradually added over a few minutes to the aqueous solution with agitation applied using a laboratory mixer at a speed sufficient to create a small vortex. Agitation was continued for 15 minutes after the final addition of calcium hydroxide. The solids content of the slurry was determined by a dry weight test as described in earlier examples and the solids content then adjusted to 45.0% w/w followed by stirring to give a homogenous slurry.

In another test (test 2), a slurry was prepared according to the procedure used in the first test except that all of the sodium hydroxide was added as an aqueous solution after the addition of calcium hydroxide. The total amount of water was the same as that used in the first test.

The properties of each slurry was determined shortly after stirring after adjusting the slurry solids content to 45%. Viscosity was measured using a Brookfield LVT viscometer and Brookfield RVT viscometer with spindle 3 at 60rpm and spindle 3 at 50rpm respectively. The stability was determined over 1 week and 2 weeks using Stability Method 2 described in Example 6.

The following results were obtained:

| Test | Viscosity (cP) LVT 60rpm | Viscosity (cP) RVT 50rpm | 1 Week Recovery (%) | 2 Week Recovery (%) |
|---|---|---|---|---|
| 1 | 364 | 415 | 95.5 | 96.9 |
| 2 | 334 | 558 | 95.6 | 95.4 |

Example 8

In one test (test 1), a 50% w/w calcium hydroxide slurry was prepared by the addition of calcium hydroxide to water. No additives were present. The calcium hydroxide was gradually added over a few minutes to water with agitation applied using a laboratory mixer at a speed sufficient to create a small vortex. Agitation was continued for 15 minutes after the final addition of calcium hydroxide. The solids content of the slurry was determined by a dry weight test as described in earlier examples and the solids content then adjusted to 50.0% w/w followed by stirring to give a homogenous slurry. The properties of the slurry were determined shortly after stirring after adjusting the slurry solids content to 50%. Viscosity was measured using a Brookfield LVT viscometer and Brookfield RVT viscometer with spindle 3 at 60rpm and spindle 3 at 5rpm respectively. The stability was determined over 2 weeks using Stability Method 2 described in Example 6.

In a second test (test 2), a 50% w/w calcium hydroxide slurry was prepared according to the method in test 1, except that Polymer B was dissolved in the water prior to the addition of calcium hydroxide powder. The amount of Polymer B used was equivalent to 0.5% by weight of dry polymer on weight of dry calcium hydroxide. The slurry properties were determined as in test 1.

In a third test (test 3), a 50% calcium hydroxide slurry was prepared according to the method in test 1, except that Polymer B and sodium carbonate were dissolved in the water prior to the addition of calcium hydroxide powder. The amount of Polymer B used was equivalent to 0.5% by weight of dry polymer on weight of dry calcium hydroxide and the amount of sodium carbonate used was equivalent to 0.6% by weight of dry Na2CO3 on weight of dry calcium hydroxide. The slurry properties were determined as in test 1.

The following results were obtained:

| Test | Viscosity (cP) LVT 60rpm | Viscosity (cP) RVT 5rpm | 2 Week Recovery (%) |
|---|---|---|---|
| 1 | > 2000 | 16700 | 0.6 |
| 2 | > 2000 | 11500 | 63.4 |
| 3 | 860 | 6580 | 93.5 |

**Claims**

1. Composition consisting essentially of an aqueous slurry comprising from 25 to 65 percent by weight Calcium Hydroxide; from 0.05 to 4 percent by weight, based on the weight of Calcium Hydroxide, of at least one acidic polymer or water-soluble salt thereof; and from 0.2 to 1 percent by weight, based on the weight of Calcium Hydroxide, of at least one co-additive selected from boric acid and water soluble salts of boric acid, such as alkali metal borates, ammonium borates, $C_2$ to $C_{10}$ carboxylic acids containing 2 or more acid groups including salts thereof (such as alkali metal salts and ammonium salts), alkali metal hydroxides, alkali metal carbonates, alkali metal sulfates, alkali metal nitrates, alkali metal phosphates, alkali metal silicates, ammonium hydroxides, ammonium carbonates, ammonium sulfates, ammonium nitrates, ammonium phosphates or ammonium silicates.

2. Composition according to claim 1, wherein the acidic polymer or salt thereof is a homopolymer or copolymer of one or more of Acrylic add, Methacrylic acid, Maleic acid, Maleic anhydride, Fumaric acid, Itaconic acid, Itaconic anhydride, Aconitic acid, Crotonic acid, Isocrotonic acid, Mesaconic acid, Vinyl acetic acid, Hydroxyacrylic acid, Undecylenic acid, Allyl sulphonic acid, Vinyl sulphonic acid, Allyl phosphonic acid, Vinyl phosphonic acid, 2-acrylamido-2-methyl propanesulphonic acid, 2-acrylamidoglycolic acid, Acrylamide, Acrylic acid esters, Acrolein, Methacrylic acid esters, Maleic acid esters, Itaconic acid esters, Fumaric acid esters, Vinyl acetate, Acrylonitrile, Styrene, $\alpha$ Methyl styrene, N-Vinyl pyrrolidone, 2-Hydroxyethyl acrylate, 2-Hydroxyethyl methacrylate, Dimethyl acrylamide, N-(hydroxymethyl)acrylamide or Vinyl formamide.

3. Composition according to claim 1, wherein the acidic polymer or salt thereof is a condensation polymer derived from the polymerisation of amino acids in the form of the free acid, full or partial alkali metal or ammonium salt or mixed salt.

4. Composition according to claim 1, wherein the acidic polymer or salt thereof is a polycarboxylic acid derived from a polysaccharide.

5. Composition according to any of claims 1 to 4, wherein the acidic polymer or salt thereof has a weight average molecular weight of 1,000 to 250,000.

6. Composition according to any of claims 1 to 5, wherein the co-additive is an alkali metal carbonate, ammonium carbonate, alkali metal hydroxide or ammonium hydroxide.

7. Method of preparing an aqueous slurry comprising from 25 to 65 percent by weight Calcium Hydroxide; from 0.05 to 4 percent by weight, based on the weight of Calcium Hydroxide, of at least one acidic polymer or salt thereof; and from 0.05 to 4 percent by weight, based on the weight of Calcium Hydroxide, of at least one or more co-additives selected from boric acid and water soluble salts of boric acid, such as alkali metal borates, ammonium borates, $C_2$ to $C_{10}$ carboxylic acids containing 2 or more acid groups including salts thereof (such as alkali metal salts and ammonium salts), alkali metal hydroxides, alkali metal carbonates, alkali metal sulfates, alkali metal nitrates, alkali metal phosphates, alkali metal silicates, ammonium hydroxides, ammonium carbonates, ammonium sulfates, ammonium nitrates, ammonium phosphates or ammonium silicates.

8. Composition comprising an aqueous slurry comprising from 25 to 65 percent by weight Calcium Hydroxide; from 0.05 to 4 percent of one or more anionic polymers or salt thereof having a relatively low polydispersity based on the weight of Calcium Hydroxide, which additionally comprises from 0.05 to 4 percent by weight, based on the weight of Calcium Hydroxide, of one or more co-additives selected from boric acid and water soluble salts of boric acid, such as alkali metal borates, ammonium borates, $C_2$ to $C_{10}$ carboxylic acids containing 2 or more acid groups including salts thereof (such as alkali metal salts and ammonium salts), alkali metal hydroxides, alkali metal carbonates, alkali metal sulfates, alkali metal nitrates, alkali metal phosphates, alkali metal silicates, ammonium hydroxides, ammonium carbonates, ammonium sulfates, ammonium nitrates, ammonium phosphates or ammonium silicates.

9. Composition according to claim 8, wherein the acidic polymer or salt thereof is a homopolymer or copolymer of one or more of Acrylic acid, Methacrylic acid, Maleic acid, Maleic anhydride, Fumaric acid, Itaconic acid, Itaconic anhydride, Aconitic acid, Crotonic acid, Isocrotonic acid, Mesaconic acid, Vinyl acetic acid, Hydroxyacrylic acid, Undecylenic acid, Allyl sulphonic acid, Vinyl sulphonic acid, Allyl phosphonic acid, Vinyl phosphonic acid, 2-acrylamido-2-methyl propanesulphonic acid, 2-acrylamidoglycolic acid, Acrylamide, Acrylic acid esters, Acrolein, Methacrylic acid esters, Maleic acid esters, Itaconic acid esters, Fumaric acid esters, Vinyl acetate, Acrylonitrile, Styrene, α Methyl styrene, N-Vinyl pyrrolidone, 2-Hydroxyethyl acrylate, 2-Hydroxyethyl methacrylate, Dimethyl acrylamide, N-(hydroxymethyl)acrylamide or Vinyl formamide.

10. Composition according to any of claims 8 to 9, wherein the acidic polymer or salt thereof has a weight average molecular weight of 2,000 to 10,000.

11. Method of preparing an aqueous slurry comprising from 25 to 65 percent by weight Calcium Hydroxide; from 0.05 to 4 percent by weight, based on the weight of Calcium Hydroxide, of at least one acidic polymer or salt thereof having a low polydispersity, and one or more co-additives selected from boric acid and water soluble salts of boric acid, such as alkali metal borates, ammonium borates, $C_2$ to $C_{10}$ carboxylic acids containing 2 or more acid groups including salts thereof (such as alkali metal salts and ammonium salts), alkali metal hydroxides, alkali metal carbonates, alkali metal sulfates, alkali metal nitrates, alkali metal phosphates, alkali metal silicates, ammonium hydroxides, ammonium carbonates, ammonium sulfates, ammonium nitrates, ammonium phosphates or ammonium silicates.

**Patentansprüche**

1. Zusammensetzung bestehend im Wesentlichen aus einer wässrigen Aufschlämmung, umfassend 25 bis 65 Gew.-% Calciumhydroxid; 0,05 bis 4 Gew.-%, auf der Basis des Gewichts von Calciumhydroxid, mindestens eines sauren Polymers oder eines wasserlöslichen Salzes davon; und 0,2 bis 1 Gew.-%, auf der Basis des Gewichts von Calciumhydroxid, mindestens eines Co-Additivs, ausgewählt aus Borsäure und wasserlöslichen Salzen der Borsäure, wie Alkalimetallboraten, Ammoniumboraten, $C_2$- bis $C_{10}$-Carbonsäuren, welche zwei oder mehr Säuregruppen enthalten, einschließlich Salzen davon (wie Alkalimetallsalze und Ammoniumsalze), Alkalimetallhydroxiden, Alkalimetallcarbonaten, Alkalimetallsulfaten, Alkalimetallnitraten, Alkalimetallphosphaten, Alkalimetallsilicaten, Ammoniumhydroxiden, Ammoniumcarbonaten, Ammoniumsulfaten, Ammoniumnitraten, Ammoniumphosphaten oder Ammoniumsilicaten.

2. Zusammensetzung nach Anspruch 1, worin das saure Polymer oder das Salz davon ein Homopolymer oder ein Copolymer von einem oder mehreren aus Acrylsäure, Methacrylsäure, Maleinsäure, Maleinsäureanhydrid, Fumarsäure, Itaconsäure, Itaconsäureanhydrid, Aconitsäure, Crotonsäure, Isocrotonsäure, Mesaconsäure, Vinylessigsäure, Hydroxyacrylsäure, Undecylensäure, Allylsulfonsäure, Vinylsulfonsäure, Allylphosphonsäure, Vinylphosphonsäure, 2-Acrylamido-2-methylpropansulfonsäure, 2-Acrylamidoglykolsäure, Acrylamid, Acrylsäureestern, Acrolein, Methacrylsäureestern, Maleinsäureestern, Itaconsäureestern, Fumarsäureestern, Vinylacetat, Acrylnitril, Styrol, α-Methylstyrol, N-Vinylpyrrolidon, 2-Hydroxyethylacrylat, 2-Hydroxyethylmethacrylat, Dimethylacrylamid, N-(Hydroxymethyl)acrylamid oder Vinylformamid ist.

3. Zusammensetzung nach Anspruch 1, worin das saure Polymer oder das Salz davon ein Kondensationspolymer darstellt, welches durch die Polymerisation von Aminosäuren in der Form der freien Säure, des vollständigen oder teilweisen Alkalimetall- oder Ammoniumsalzes oder des gemischten Salzes erhalten ist.

4. Zusammensetzung nach Anspruch 1, worin das saure Polymer oder das Salz davon eine Polycarbonsäure, welche von einem Polysaccharid abgeleitet ist, darstellt.

5. Zusammensetzung nach einem der Ansprüche 1 bis 4, worin das saure Polymer oder das Salz davon ein gewichtsmittleres Molekulargewicht von 1.000 bis 250.000 aufweist.

6. Zusammensetzung nach einem der Ansprüche 1 bis 5, worin das Co-Additiv ein Alkalimetallcarbonat, Ammoniumcarbonat, Alkalimetallhydroxid oder Ammoniumhydroxid darstellt.

7. Verfahren zur Herstellung einer wässrigen Aufschlämmung, umfassend 25 bis 65 Gew.-% Calciumhydroxid; 0,05 bis 4 Gew.-%, auf der Basis des Gewichts von Calciumhydroxid, mindestens eines sauren Polymers oder eines Salzes davon; und 0,05 bis 4 Gew.-%, auf der Basis des Gewichts von Calciumhydroxid, mindestens eines oder mehrerer Co-Additive, ausgewählt aus Borsäure und wasserlöslichen Salzen der Borsäure, wie Alkalimetallboraten, Ammoniumboraten, $C_2$- bis $C_{10}$-Carbonsäuren, welche zwei oder mehr Säuregruppen enthalten, einschließlich Salzen davon (wie Alkalimetallsalze und Ammoniumsalze), Alkalimetallhydroxiden, Alkalimetallcarbonaten, Alkalimetallsulfaten, Alkalimetallnitraten, Alkalimetallphosphaten, Alkalimetallsilicaten, Ammoniumhydroxiden, Ammoniumcarbonaten, Ammoniumsulfaten, Ammoniumnitraten, Ammoniumphosphaten oder Ammoniumsilicaten.

8. Zusammensetzung umfassend eine wässrige Aufschlämmung, umfassend 25 bis 65 Gew.-% Calciumhydroxid; 0,05 bis 4% eines oder mehrerer anionischer Polymere oder Salzen davon mit einer relativ niedrigen Polydispersität auf der Basis des Gewichts von Calciumhydroxid, welche zusätzlich 0,05 bis 4 Gew.-%, auf der Basis des Gewichts von Calciumhydroxid, eines oder mehrerer Co-Additive umfasst, ausgewählt aus Borsäure und wasserlöslichen Salzen von Borsäure, wie Alkalimetallboraten, Ammoniumboraten, $C_2$- bis $C_{10}$-Carbonsäuren, welche zwei oder mehr Säuregruppen enthalten, einschließlich Salzen davon (wie Alkalimetallsalze und Ammoniumsalze), Alkalimetallhydroxiden, Alkalimetallcarbonaten, Alkalimetallsulfaten, Alkalimetallnitraten, Alkalimetallphosphaten, Alkalimetallsilicaten, Ammoniumhydroxiden, Ammoniumcarbonaten, Ammoniumsulfaten, Ammoniumnitraten, Ammoniumphosphaten oder Ammoniumsilicaten.

9. Zusammensetzung nach Anspruch 8, worin das saure Polymer oder das Salz davon ein Homopolymer oder ein Copolymer eines oder mehrerer aus Acrylsäure, Methacrylsäure, Maleinsäure, Maleinsäureanhydrid, Fumarsäure, Itaconsäure, Itaconsäureanhydrid, Aconitsäure, Crotonsäure, Isocrotonsäure, Mesaconsäure. Vinylessigsäure, Hydroxyacrylsäure, Undecylensäure, Allylsulfonsäure, Vinylsulfonsäure, Allylphosphonsäure, Vinylphosphonsäure, 2-Acrylamido-2-methylpropansulfonsäure, 2-Acrylamidoglykolsäure, Acrylamid, Acrylsäureestern, Acrolein, Methacrylsäureestern, Maleinsäureestern, Itaconsäureestern, Fumarsäureestern, Vinylacetat, Acrylnitril, Styrol, $\alpha$-Methylstyrol, N-Vinylpyrrolidon, 2-Hydroxyethylacrylat, 2-Hydroxyethylmethacrylat, Dimethylacrylamid, N-(Hydroxymethyl)acrylamid oder Vinylformamid ist.

10. Zusammensetzung nach einem der Ansprüche 8 bis 9, worin das saure Polymer oder das Salz davon ein gewichtsmittleres Molekulargewicht von 2.000 bis 10.000 aufweist.

11. Verfahren zur Herstellung einer wässrigen Aufschlämmung, umfassend 25 bis 65 Gew.-% Calciumhydroxid; 0,05 bis 4 Gew.-%, auf der Basis des Gewichts von Calciumhydroxid, mindestens eines sauren Polymers oder eines Salzes davon mit einer niedrigen Polydispersität, und ein oder mehrere Co-Additive, ausgewählt aus Borsäure und wasserlöslichen Salzen von Borsäure, wie Alkalimetallboraten, Ammoniumboraten, $C_2$- bis $C_{10}$-Carbonsäuren, welche zwei oder mehr Säuregruppen enthalten, einschließlich Salzen davon (wie Alkalimetallsalze und Ammoniumsalze), Alkalimetallhydroxiden, Alkalimetallcarbonaten, Alkalimetallsulfaten, Alkalimetallnitraten, Alkalimetallphosphaten, Alkalimetallsilicaten, Ammoniumhydroxiden, Ammoniumcarbonaten, Ammoniumsulfaten, Ammoniumnitraten, Ammoniumphosphaten oder Ammoniumsilicaten.

**Revendications**

1. Composition essentiellement composée d'une suspension aqueuse comprenant 25% à 65% en poids d'hydroxyde de calcium ; 0,05% à 4% en poids, par rapport au poids d'hydroxyde de calcium, d'au moins un polymère acide ou un sel hydrosoluble de celui-ci ; et de 0,2% à 1% en poids, par rapport au poids d'hydroxyde de calcium, d'au moins un co-additif choisi parmi l'acide borique et les sels hydrosolubles d'acide borique tels que les borates de métaux alcalins, les borates d'ammonium, les acides carboxyliques en $C_2$ à $C_{10}$ contenant deux groupes acides ou plus, y compris leurs sels (tels que les sels de métaux alcalins et les sels d'ammonium), les hydroxydes de métaux alcalins, les carbonates de métaux alcalins, les sulfates de métaux alcalins, les nitrates de métaux alcalins, les phosphates de métaux alcalins, les silicates de métaux alcalins, les hydroxydes d'ammonium, les carbonates d'ammonium, les sulfates d'ammonium, les nitrates d'ammonium, les phosphates d'ammonium ou les silicates d'ammonium.

2. Composition selon la revendication 1, dans laquelle le polymère acide ou le sel de celui-ci est un homopolymère ou un copolymère d'un ou de plusieurs composés parmi l'acide acrylique, l'acide méthacrylique, l'acide maléique, l'anhydride maléique, l'acide fumarique, l'acide itaconique, l'anhydride itaconique, l'acide aconitique, l'acide crotonique, l'acide isocrotonique, l'acide mésaconique, l'acide vinylacétique, l'acide hydroxyacrylique, l'acide undécylénique, l'acide allylsulfonique, l'acide vinylsulfonique, l'acide allylphosphonique, l'acide vinylphosphonique, l'acide 2-acrylamido-2-méthylpropanesulfonique, l'acide 2-acrylamidoglycolique, l'acrylamide, les esters d'acide acrylique, l'acroléine, les esters d'acide méthacrylique, les esters d'acide maléique, les esters d'acide itaconique, les esters d'acide fumarique, l'acétate de vinyle, l'acrylonitrile, le styrène, l'$\alpha$-méthylstyrène, la N-vinylpyrrolidone, l'acrylate de 2-hydroxyéthyle, le méthacrylate de 2-hydroxyéthyle, le diméthylacrylamide, le N-(hydroxyméthyl)acrylamide ou le vinylformamide.

3. Composition selon la revendication 1, dans laquelle le polymère acide ou le sel de celui-ci est un polymère de condensation issu de la polymérisation d'acides aminés sous la forme de l'acide libre, du sel complet ou partiel d'ammonium ou de métal alcalin ou du sel mixte.

4. Composition selon la revendication 1, dans laquelle le polymère acide ou le sel de celui-ci est un acide polycarboxylique d'un polysaccharide.

5. Composition selon l'une quelconque des revendications 1 à 4, dans laquelle le polymère acide ou le sel de celui-ci présente une masse moléculaire moyenne en masse de 1 000 à 250 000.

6. Composition selon l'une quelconque des revendications 1 à 5, dans laquelle le co-additif est un carbonate de métal alcalin, un carbonate d'ammonium, un hydroxyde de métal alcalin ou un hydroxyde d'ammonium.

7. Procédé de préparation d'une suspension aqueuse comprenant 25% à 65% en poids d'hydroxyde de calcium ; 0,05% à 4% en poids, par rapport au poids d'hydroxyde de calcium, d'au moins un polymère acide ou un sel hydrosoluble de celui-ci ; et 0,05% à 4% en poids, par rapport au poids d'hydroxyde de calcium, d'au moins un ou de plusieurs co-additifs choisis parmi l'acide borique et les sels hydrosolubles d'acide borique tels que les borates de métaux alcalins, les borates d'ammonium, les acides carboxyliques en $C_2$ à $C_{10}$ contenant deux groupes acides ou plus, y compris leurs sels (tels que les sels de métaux alcalins et les sels d'ammonium), les hydroxydes de métaux alcalins, les carbonates de métaux alcalins, les sulfates de métaux alcalins, les nitrates de métaux alcalins, les phosphates de métaux alcalins, les silicates de métaux alcalins, les hydroxydes d'ammonium, les carbonates d'ammonium, les sulfates d'ammonium, les nitrates d'ammonium, les phosphates d'ammonium ou les silicates d'ammonium.

8. Composition comprenant une suspension aqueuse comprenant 25% à 65% en poids d'hydroxyde de calcium ; 0,05% à 4% en poids, par rapport au poids d'hydroxyde de calcium, d'un ou de plusieurs polymères anioniques ou d'un sel de ceux-ci présentant une polymolécularité relativement faible, qui comprend en outre 0,05% à 4% en poids, par rapport au poids d'hydroxyde de calcium, d'un ou de plusieurs co-additifs choisis parmi l'acide borique et les sels hydrosolubles d'acide borique tels que les borates de métaux alcalins, les borates d'ammonium, les acides carboxyliques en $C_2$ à $C_{10}$ contenant deux groupes acides ou plus, y compris leurs sels (tels que les sels de métaux alcalins et les sels d'ammonium), les hydroxydes de métaux alcalins, les carbonates de métaux alcalins, les sulfates de métaux alcalins, les nitrates de métaux alcalins, les phosphates de métaux alcalins, les silicates de métaux alcalins, les hydroxydes d'ammonium, les carbonates d'ammonium, les sulfates d'ammonium, les nitrates d'ammonium, les phosphates d'ammonium ou les silicates d'ammonium.

9. Composition selon la revendication 8, dans laquelle le polymère acide ou le sel de celui-ci est un homopolymère ou un copolymère d'un ou de plusieurs composés parmi l'acide acrylique, l'acide méthacrylique, l'acide maléique, l'anhydride maléique, l'acide fumarique, l'acide itaconique, l'anhydride itaconique, l'acide aconitique, l'acide crotonique, l'acide isocrotonique, l'acide mésaconique, l'acide vinylacétique, l'acide hydroxyacrylique, l'acide undécylénique, l'acide allylsulfonique, l'acide vinylsulfonique, l'acide allylphosphonique, l'acide vinylphosphonique, l'acide 2-acrylamido-2-méthylpropanesulfonique, l'acide 2-acrylamidoglycolique, l'acrylamide, les esters d'acide acrylique, l'acroléine, les esters d'acide méthacrylique, les esters d'acide maléique, les esters d'acide itaconique, les esters d'acide fumarique, l'acétate de vinyle, l'acrylonitrile, le styrène, l'α-méthylstyrène, la N-vinylpyrrolidone, l'acrylate de 2-hydroxyéthyle, le méthacrylate de 2-hydroxyéthyle, le diméthylacrylamide, le N-(hydroxyméthyl) acrylamide ou le vinylformamide.

10. Composition selon l'une quelconque des revendications 8 à 9, dans laquelle le polymère acide ou le sel de celui-ci présente une masse moléculaire moyenne en masse de 2 000 à 10 000.

11. Procédé de préparation d'une suspension aqueuse comprenant 25% à 65% en poids d'hydroxyde de calcium ; 0,05% à 4% en poids, par rapport au poids d'hydroxyde de calcium, d'au moins un polymère acide ou d'un sel de celui-ci présentant un faible polymolécularité, et un ou plusieurs co-additifs choisis parmi l'acide borique et les sels hydrosolubles d'acide borique tels que les borates de métaux alcalins, les borates d'ammonium, les acides carboxyliques en $C_2$ à $C_{10}$ contenant deux groupes acides ou plus, y compris leurs sels (tels que les sels de métaux alcalins et les sels d'ammonium), les hydroxydes de métaux alcalins, les carbonates de métaux alcalins, les sulfates de métaux alcalins, les nitrates de métaux alcalins, les phosphates de métaux alcalins, les silicates de métaux alcalins, les hydroxydes d'ammonium, les carbonates d'ammonium, les sulfates d'ammonium, les nitrates d'ammonium, les phosphates d'ammonium ou les silicates d'ammonium.

Stability Method 1 Stability Bottle

Stability Method 2 Stability Bottle

Approx 45 mm

External

Dimensions

Approx 120 mm

Approx 85 mm

Approx 60 mm